# EUROPÄISCHE PATENTANMELDUNG

(11) **EP 2 103 234 A2**
(43) Veröffentlichungstag der Anmeldung: **23.09.2009**
(21) Anmeldenummer: 09001927.4
(22) Anmeldetag: 11.02.2009
(51) Int. Cl.: A47J 31/057, A47J 31/20

(54) **Vollautomatische Teekanne (türkischer Samowar) mit einem in der Mitte (360°) angeordeten Aufsteigrohr und einer Timerfunktion**

(30) Priorität: 14.02.2008 TR 200800957
(71) Anmelder: Yüksel, Erol, 45886 Gelsenkirchen (DE)
(72) Erfinder: Yüksel, Erol, 45886 Gelsenkirchen (DE)

(57) **Zusammenfassung**

Elektrisch betriebene vollautomatische Teekanne mit Integrierter Brüheinheit und Wasservorratsbehälter, **dadurch gekennzeichnet, das** ein Steigrohr in der Mitte mit einer 360° Aufnahme mit Doppelventil mit Y- Dichtung beide Behälter miteinander verbindet.

Die Funktionsabläufe werden mit einer Basisstation elektronisch gesteuert.

## Beschreibung

Die vorligende Erfindung betrifft eine elektrisch betreibbare automatische Teemaschine, bei der das Teewasser erhitzt und in die Teezubereitungskanne geleitet wird. Zusammengesetz ist die Teemaschine aus einer Teekanne und einem Wasserbehälter.

### Allgemeines über Tee

Der schwarze Tee wird lose (klein gerieben) in Verpackungen oder als Beuteltee in vielerlei Sorten, die sich durch ihre Herkunft und die Art der Blätter unterscheiden angeboten.

Teebeutel sind in der Zubereitung praktisch und schnell. Einfach Beutel in eine Tasse oder in einem Glas legen, mit kochendem Wasser übergiessen und ca. 7 min ziehen lassen.

Um aber losen Tee zu kochen sollte sich die Teekanne aus einem Wasserbehälter und einer Teekanne zusammensetzen.

### Teezubereitung mit einer normalen Teekanne

Für eine erfolgreiche Teezubereitung befüllt man die obere Teekanne mit der benötigten Menge losem Tee oder Teebeutel. Das Wasser in der unteren Kanne wird zum kochen gebracht. Danach wird das siedende Wasser (je nach gewünschter Teemenge) über die Teeblätter gegossen. Nach dem Aufgießen sollte man den Tee ziehen lassen.

Die oben beschriebene Teezubereitung ist aufwendig, da ständig das Wasser im Wasserbehälter bis zur Kochzeit kontrolliert werden muss und das Wasser zum Aufgießen nach Augenmaß gegossen wird.

### Zweck der Erfindung

Die Erfindung stellt sich nun die Aufgabe, eine Teemaschine zu schaffen, bei der das Teewasser im Wasserbehälter erhitzt und nach oben in die Teekanne geleitet wird. Sodass der Tee automatisch in kürzester Zeit aufbereitet werden kann.

### Funktionalität des Teeautomats:

- Verdecktes Heizelement (2.4)
- Heizrohr (2.5)
- Einlassventil (2.5.2)
- Heizstab für Einlaßrohr (2.5.4)
- Aufsteigrohr (2.2)
- Wasserausflußrohr im Teesieb (4.1)
- Zweiwegeventil (Doppelventil) (2.1)
- Einwegventil (3.1)
- per Finger bedienbare Bedienfeld (Touchscreen) (1.1)

### Beschreibung der Abbildungen

- Abb. 1: Seitenschnitt des Teeautomats
- Abb. 2: demontierte Frontsicht
- Abb. 3: Front-Ausschnitt Y-Dichtung
- Abb. 4: Front-Ausschnitt Zweiwegeventil
- Abb. 5: Front-Ausschnitt Wasserweg
- Abb. 6: Front-Ausschnitt Aufsteigrohr und Zweiwegeventil (Doppelventil)
- Abb. 7: Front-Ausschnitt Einwegventil und Wasserausflussrohr im Teesieb

### Nummerierung der Einzelteile in den Abbildungen

### 1. Basisstation (Teile)

1.1 Digitale Touchscreen Anzeige- Bedienfeld per Finger bedienbare Bedienfeld (Touchscreen)
1.2 Elektrische Verbindung -weiblich-

### 2. Wasserbehälter (Teile)

2.1 Zweiwegeventil
2.1.1 "Y" Dichtung
2.2 Aufsteigrohr
2.3 Bodenplatte der Teekanne
2.4 Verdecktes Heizelement
2.5 Heizrohr
2.5.1 Einlaßrohr
2.5.2 Einlaßventil
2.5.3 Auslaßrohr
2.5.4 Heizstab für Einlaßrohr
2.6 Elektrische Verbindung (Männlich)
2.7 Teekannendeckel

### 3. Teezubereitungskanne (Teile)

3.1 Einwegventil
3.2 Bodenplatte der Teekanne

### 4. Teesieb (Teile)

4.1 Wasserausflußrohr im Teesieb

### Näherer Erläuterung der Erfindung anhand der Zeichnungen

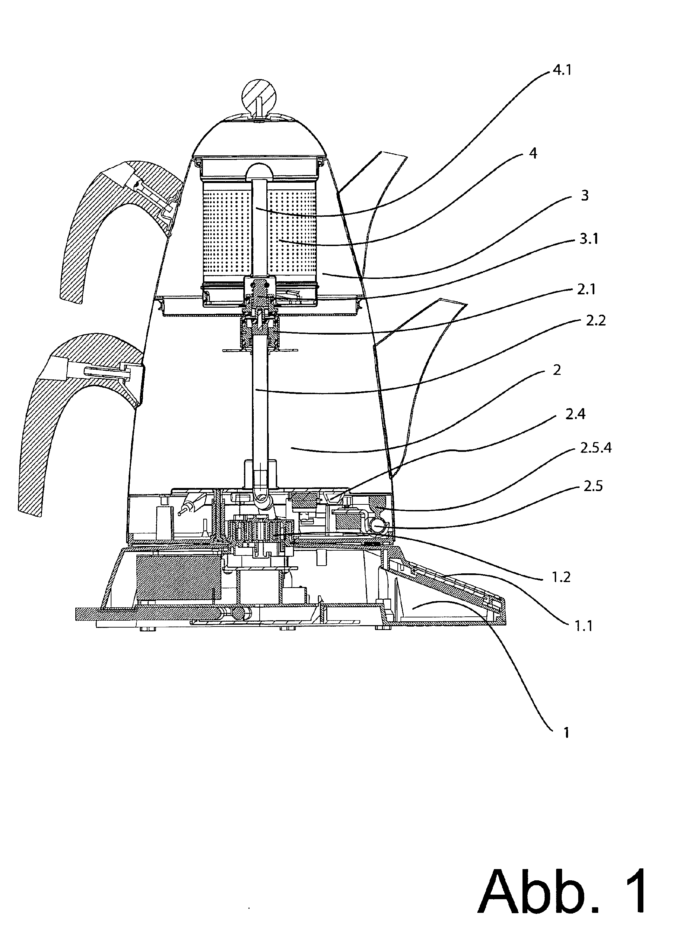

Fig. 1 Wie aus der Abbildung ersichtlich, setzt sich die Teemaschine aus folgenden Teilen zusammen:
Eine Basisstation (1) mit einer per Finger bedienbaren Touch Screen AnzeigeBedienfeld (1.1), die sich auf der Grundfläche des Wasserbehälters (2) befindet. Auf dem Wasserbehälter befindet sich eine Teezubereitungskanne (3) mit einem Teesieb (4).

Zur Teezubereitung gibt man eine geeignete Menge Tee in das Teesieb (4) und füllt den Wasserbehälter (2) mit genügend Wasser.
Durch die elektrisch betriebene Basisstation (1) läutf die benötigte Menge an Wasser (im Wasserbehälter (2)) automatisch in die Teezubereitungskanne (3) und schließt selbstständig die Teezubereitung ab.

Man startet die Teemaschine mit der auf der Basisstation (1) befindliche Touchscreen Anzeige- Bedientafel (1.1). Das versteckte Heizelement, das sich auf der Bodenplatte des Wasserbehälters (2.3) befindet, erhitzt das Wasser. Danach gelant dieses Wasser durch ein Einlaßventil in den Heizrohr (2.5). Die Wassertemperatur im Heizrohr (2.5) wird durch das Heizstab (2.5.4) erhöht.

In dieser Phase erreicht das erwärmte Wasser den Siedepunkt und erzeugt dadurch einen Druck (dieses Wasser kann wegen des Einwegventils nicht zurück) so erreicht es über Sprühwege die Teekanne. Zunächst einmal über das Aufsteigrohr (2.2) in das Zweiwegeventil (2.1). , anschließend erreicht es das mittlere Wasserrohr und folglich über das Einlassrohr für Wasser.

### Funktionen des Zweiwegeventils

Das Zweiwegeventil (2.1) steckt an der Spitze des mittleren Wasserrohres (2.2), welches sich im Wasserbehälter (2) befindet. Der Silikon verdichtete, Y geformte Dichtungsring (2.1.1) befindet sich auf dem Ventil (2.1). Wird Gewicht auf dem Zweiwegeventil (2.1) ausgeübt, so drückt das Außenteil des Ventils komplett nach unten. (Das ist der Fall, wenn die
Teekanne auf dem Wasserbehälter gesetzt wird). Bei Druck auf das Ventil entsteht durch Entweichen von Luft ein Vakuum. Durch das Vakuum haftet der Dichtungsring ["Y" Dichtung] (2.1.1) am Teekannenboden und es wird die Wasserzufuhr [Aufsteigrohr (2.2)] vom Ventil zur Teekanne gewährleistet. Solange die Teekanne ein Gewicht auf den Dichtungsring (2.1.1) ausübt und weil durch das Zustandekommen des Vakuums keine Wasserbildung im Ventil vorkommt, entweicht kein Wasser und Wasserdampf. Auf diese Weise, kann das im Wasserkocher erwärmte Wasser bei erreichen des Siedepunkts durch das Zweiwegeventil (2.1) und folglich über den Aufsteigrohr (2.2) die Teezubereitungskanne (3) erreichen.

Über die elektrisch betriebene Anzeige- Bedientafel (1.1) auf der Basisstation wird nach Ablauf der vorgeschriebenen Zeit, der Heizstab für Einlaßrohr (2.5.4) abgestellt und der Sprühvorgang automatisch beendet. Somit erfolgt eine automatische Teezubereitung.

Nachdem der Sprühvorgang beendet ist, stellt sich die Teekanne automatisch auf die Kochposition. In dieser Phase wird das verdeckte Heizelement (2.4) eingeschaltet, sorgt für das Kochen des Wassers im Wasserbehälter (2). Danach beginnt die Umschaltung auf Wärmeposition, in der das Wasser durch ein Thermostat ständig auf einer bestimmten Temperatur gehalten wird.

Nachdem der Brühvorgang nach einer bestimmten Zeit abgeschlossen ist ertönt automatisch ein Sprachhinweis.

Es besteht die Möglichkeit, eine automatische Zeiteinstellung für die Teezubereitung zu programmieren. Auf der Touch Screen Anzeige- Bedienfeld (1.1) wird eine beliebige Zeit eingegeben. Wenn die programmierte Zeit erreicht ist, wird der Tee durch die Teemaschine automatisch zubereitet.

Über die Touch Screen Anzeigetafel (1.1) kann der Wasserbehälter (2) auch als Wasserkocher benutzt werden.

### Die vollautomatische Teekanne

Die vorliegende Erfindung betrifft eine elektrisch betreibbare, automatische Teemaschine, bei der das Teewasser erhitzt und in die Teezubereitungskanne geleitet wird. Zusammengesetzt ist die Teemaschine aus einer Teekanne und einem Wasserbehälter.

### Allgemeines über Tee

Der Tee wird lose (klein gerieben) in Verpackungen oder als Beuteltee in vielerlei Sorten, die sich durch ihre Herkunft und die Art der Blätter unterscheiden, angeboten.

Teebeutel sind in der Zubereitung praktisch und schnell. Einfach Beutel in eine Tasse oder in ein Glas legen, mit kochendem Wasser übergießen und ca. 7 Min. ziehen lassen.

Um aber losen Tee zu kochen, sollte sich die Teekanne aus einem Wasserbehälter und einer Teekanne zusammensetzen. Dieses hat den Vorteil, das man die Teestärke selbst dosieren und damit bestimmen kann.

### Teezubereitung mit einer normalen Teekanne

Für eine erfolgreiche Teezubereitung nach türkische und russische Art befüllt man die obere Teekanne mit der benötigten Menge losem Tee oder Teebeutel. Das Wasser in der unteren Kanne wird zum Kochen gebracht. Danach wird das siedende Wasser mit ca. 90° Celsius (je nach gewünschter Teekonzentratmenge) über die Teeblätter gegossen. Nach dem Aufgießen sollte man den Tee ziehen lassen (ca.15-20 min.).

Die oben beschriebene Teezubereitung ist aufwendig, da das Wasser im Wasserbehälter für den Aufguss zunächst auf 90° Celsius absinken muss.

### Zweck der Erfindung

Die Erfindung stellt sich nun die Aufgabe, eine Teemaschine zu schaffen, bei der das Teewasser im Wasserbehälter erhitzt und nach oben in die Teekanne in empfohlener Temperatur ca.90° Celsius geleitet wird, sodass der Tee automatisch in kürzester

Zeit zubereitet werden kann.

### Einzelteile des Teeautomats:

- Verdecktes Heizelement (2.4)
- Heizrohr (2.5)
- Einlassventil (2.5.2)
- Heizelement für Einlaßrohr (2.5.4)
- Aufsteigrohr (2.2)
- Wasserausflußrohr im Teesieb (4.1)
- Zweiwegeventil (Doppelventil) (Sicherheitsventil) (2.1)
- Einwegeventil (Sicherheitsventil) (3.1)
- per Finger bedienbare Bedienfeld (Touchscreen) (1.1)

### Beschreibung der Abbildungen

- Abb. 1: Seitenschnitt des Teeautomats

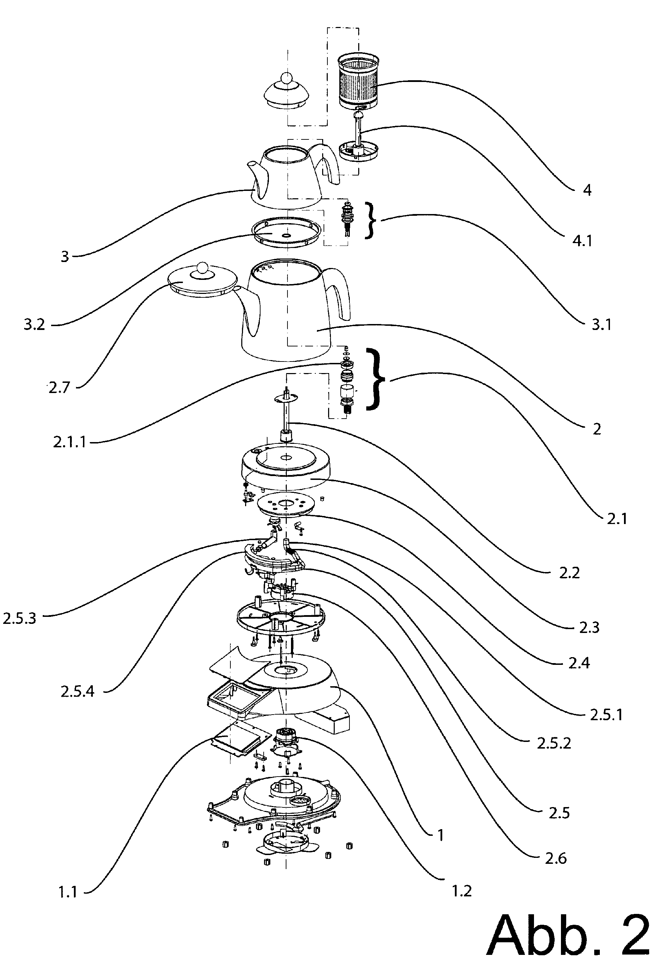

- Abb. 2: demontierte Frontsicht

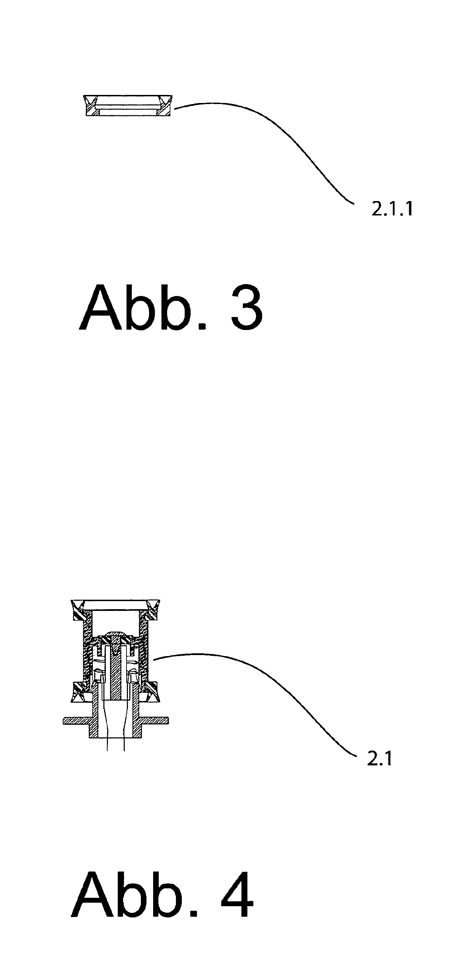

- Abb. 3: Front-Ausschnitt Y-Dichtung
- Abb. 4: Front-Ausschnitt Zweiwegeventil

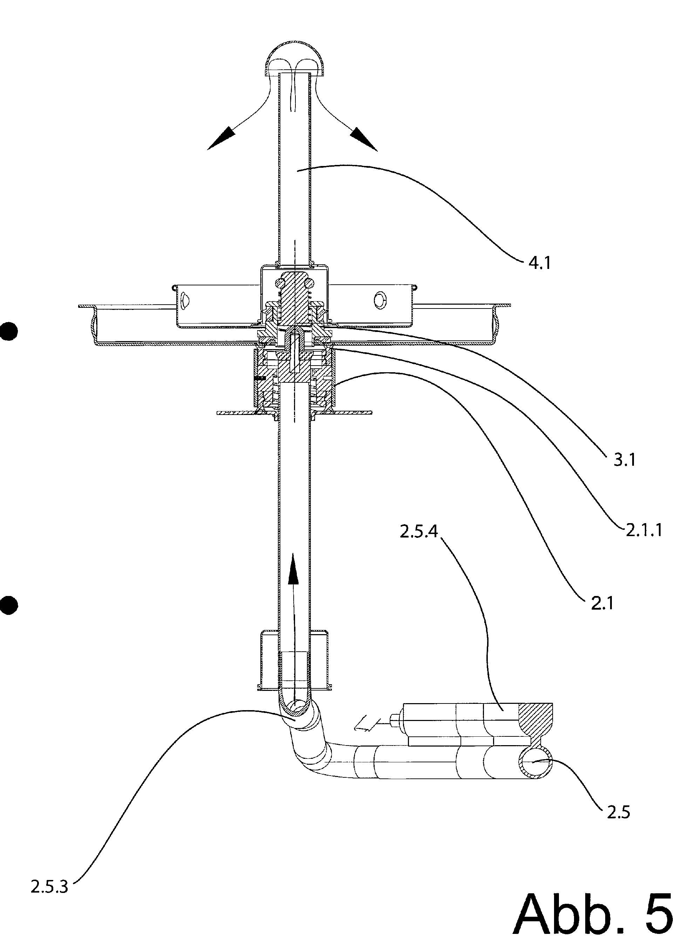

- Abb. 5: Front-Ausschnitt Wasserweg

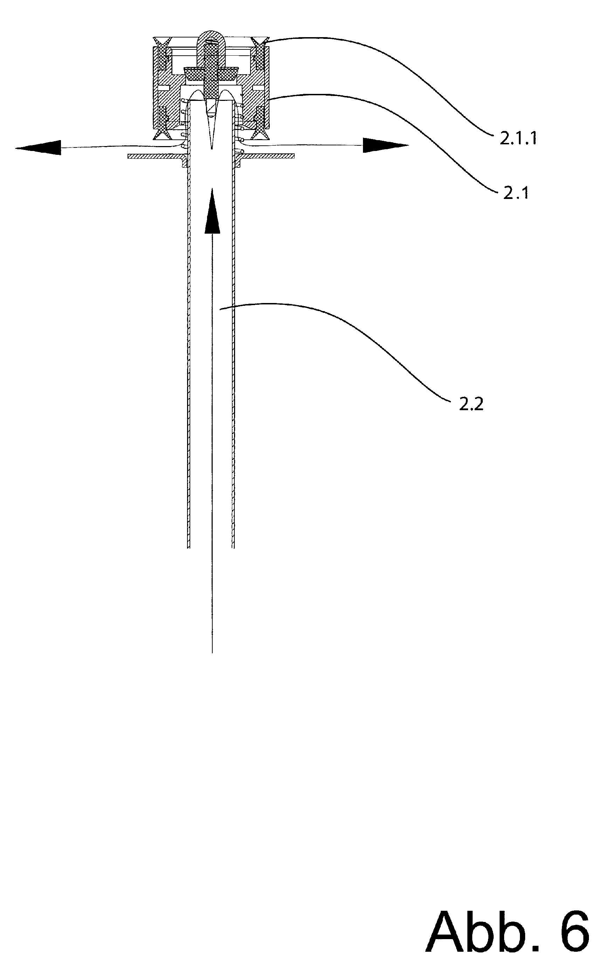

- Abb. 6: Front-Ausschnitt Aufsteigrohr und Zweiwegeventil (Doppelventil)

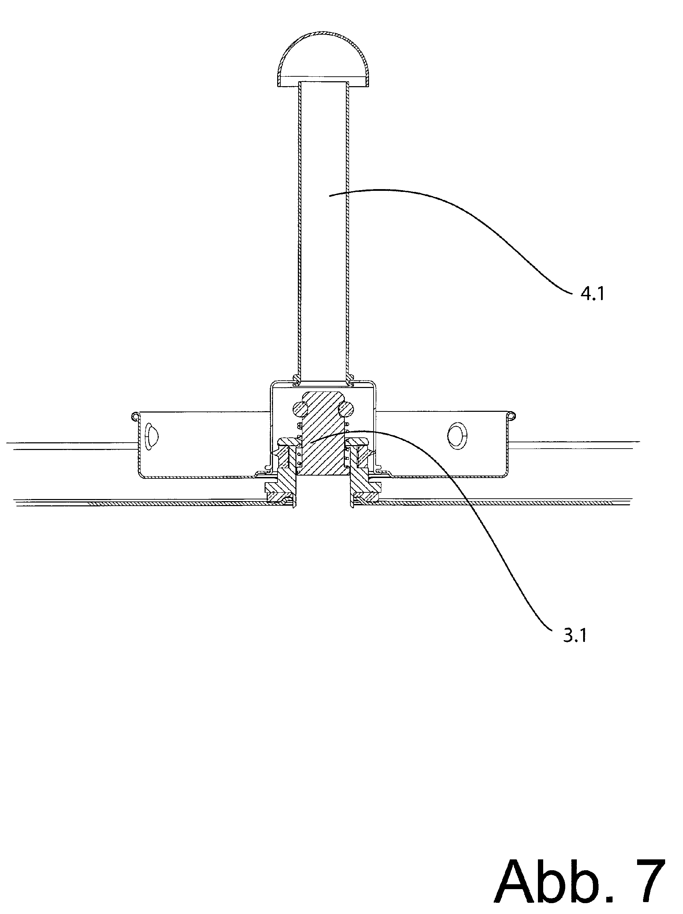

- Abb. 7: Front-Ausschnitt Einwegeventil und Wasserausflussrohr im Teesieb

### Nummerierung der Einzelteile in den Abbildungen

### 1. Basisstation (Teile)

1.1 Digitale Touchscreen Anzeige- Bedienfeld per Finger bedienbare Bedienfeld (Touchscreen)
1.2 Elektrische Verbindung -weiblich-

### 2. Wasserbehälter (Teile)

2.1 Zweiwegeventil
2.1.1 "Y" Dichtung
2.2 Aufsteigrohr
2.3 Bodenplatte der Teekanne
2.4 Verdecktes Heizelement
2.5 Heizrohr
2.5.1 Einlaßrohr
2.5.2 Einlaßventil
2.5.3 Auslaßrohr
2.5.4 Heizelement für Einlaßrohr
2.6 Elektrische Verbindung (Männlich)
2.7 Teekannendeckel

### 3. Teezubereitungskanne (Teile)

3.1 Einwegeventil
3.2 Bodenplatte der Teekanne

### 4. Teesieb (Teile)

4.1 Wasserausflußrohr im Teesieb

### Näherer Erläuterung der Erfindung anhand der Zeichnungen

Abb. 1 Wie aus der Abbildung ersichtlich, setzt sich die Teemaschine aus folgenden Teilen zusammen:
Eine Basisstation (1) mit einen Touch Screen Anzeigebedienfeld (1.1), die sich auf das Grundgehäuse des Wasserbehälters (2) befindet. Auf dem Wasserbehälter befindet sich eine Teezubereitungskanne (3) mit einem Teesieb (4).

Zur Teezubereitung gibt man eine gewünschte Menge Tee in das Teesieb (4) und füllt den Wasserbehälter (2) mit genügend Wasser (Max. Anzeige).
Durch die elektrisch betriebene Basisstation (1) läuft die benötigte Menge an Wasser (im Wasserbehälter (2)) automatisch in die Teezubereitungskanne (3) und schließt selbstständig die Teezubereitung ab.

Man startet die Teemaschine mit der auf der Basisstation (1) befindliche Touchscreen Anzeige- Bedientafel (1.1). Das versteckte Heizelement, das sich auf der Bodenplatte des Wasserbehälters (2.3) befindet, erhitzt das Wasser. Danach gelangt dieses Wasser durch ein Einlaßventil in das Heizrohr (2.5). Die Wassertemperatur im Heizrohr (2.5) wird durch das Heizelement (2.5.4) erhöht.

In dieser Phase erreicht das erwärmte Wasser den Siedepunkt und erzeugt dadurch einen Druck (dieses Wasser kann wegen des Einwegeventil nicht zurück) so erreicht es über Sprühwege die Teekanne, zunächst einmal über das Aufsteigrohr (2.2) in das Zweiwegeventil (2.1).

### Funktionen des Zweiwegeventils

Das Zweiwegeventil (2.1) steckt an der Spitze des mittleren Aufsteigrohrs (2.2), welches sich im Wasserbehälter (2) befindet. Der Silikon verdichtete, Y geformte Dichtungsring (2.1.1) befindet sich auf dem Ventil (2.1). Wird Gewicht auf dem Zweiwegeventil (2.1) ausgeübt, so drückt das Außenteil das Ventils komplett nach unten. (Das ist der Fall, wenn die Teekanne auf dem Wasserbehälter aufgesetzt wird). Bei Druck auf das Ventil entsteht durch Entweichen von Luft ein Vakuum. Durch das Vakuum haftet der Dichtungsring ["Y" Dichtung] (2.1.1) am Teekannenboden und es wird die Wasserzufuhr [Aufsteigrohr (2.2)] vom Ventil zur Teekanne gewährleistet. Solange die Teekanne ein Gewicht auf den Dichtungsring (2.1.1) ausübt und damit ein Vakuum zustande kommt, kann dem Ventil kein Wasser bzw. Wasserdampf entweichen. Auf diese Weise, kann das im Wasserkocher erwärmte Wasser bei erreichen des Siedepunkts durch das Zweiwegeventil (2.1) und folglich über den Aufsteigrohr (2.2) die Teezubereitungskanne (3) erreichen.

Über die elektrisch betriebene Anzeige- Bedientafel (1.1) auf der Basisstation wird nach Ablauf der vorgeschriebenen Zeit, das Heizelement für das Einlaßrohr (2.5.4) abgestellt und der Sprühvorgang automatisch beendet. Somit erfolgt eine automatische Teezubereitung in gewünschter Menge.

Nachdem der Sprühvorgang beendet ist, stellt sich die Teekanne automatisch auf die Kochposition. In dieser Phase wird das verdeckte Heizelement (2.4) eingeschaltet, sorgt für das Kochen des Wassers im Wasserbehälter (2). Danach beginnt die Umschaltung auf Wärmeposition, in der das Wasser durch ein Thermostat ständig auf einer bestimmten Temperatur (bzw. gewünschte Temperatur) gehalten wird.

Nachdem der Brühvorgang nach einer bestimmten Zeit abgeschlossen ist, ertönt automatisch der Satz als ein Sprachhinweis: "Die Teezubereitung ist abgeschlossen", in verschiedenen Sprachen. Dieser Vorgang kann auch durch einen Signalton gemeldet werden.

Wenn der Wasserspiegel auf minimum sinkt ertönt ebenfalls automatisch ein Sprachhinweis in verschiedenen Sprachen, "Bitte kontrollieren sie den Wasserstand". Auch hier kann man den Sprachhinweis durch einen Signalton ersetzen.

Über die Timerfunktion besteht die Möglichkeit, eine automatische Zeiteinstellung für die Teezubereitung zu programmieren. Auf der Touch Screen Anzeige- Bedienfeld (1.1) wird eine beliebige Startzeit eingegeben. Wenn die programmierte Zeit erreicht ist, wird der Tee durch die Teemaschine automatisch zubereitet.

Über die Touch Screen Anzeigetafel (1.1) kann der Wasserbehälter (2) auch als Wasserkocher benutzt werden.
**1. Patentanspruch auf die elektrisch betreibbare Teemaschine, zusammengesetzt aus:**
   - einer digitalen per Finger bedienbaren Bedienfeld (1) (Touchscreen),
   - einem Wasserbehälter (2), welches das Wasser über ein verstecktes Heizelement (2.4) kocht und warm hält und
   - einer Teezubereitungskanne (3), das durch einen automatischen Sprühvorgang Tee zubereitet.
      **Eigenschaften der Erfindung; eine automatische Teezubereitung erfolgt durch;**
   - Das Einlassventil (2.5.2), welches das Zurücklaufen des Wassers im Heizrohr (2.5) verhindert
   - Das zwischen dem Einlaßventil (2.5.2) und Aufsteigrohr (2.2) befindliche Heizrohr (2.5)
   - Der Heizstab für Einlaßrohr (2.5.4), welches über dem Heizrohr (2.5) befestigt ist und wodurch das Wasser den Siedepunkt erreicht und ein Druck erzeugt.
   - Aufsteigrohr (2.2)
   - Zweiwegeventil (2.1)
   - Einwegventil (3.1), welches das Zurücklaufen des Wasser in die Teezubereitugskanne verhindert.
   - Wasserausflußrohr im Teesieb (4.1)
**2. Y-Dichtung (2.1.1)**
   Wird Gewicht auf das Zweiwegeventil (2.1) ausgeübt, so drückt das Außenteil des Ventils komplett nach unten. Bei Druck auf das Ventil (2.1) entsteht durch entweichen von Luft ein Vakuum. Durch das Vakuum haftet der Dichtungsring (2.1.1) am Teekannenboden und es wird die Wasserzufuhr vom Zweiwegeventil (2.1) zum Wasserausflußrohr im Teesieb gewährleistet.
**3. Sprachfunktion**
   Nachdem die automatische Teezubereitung abgeschlossen ist, ertönt ein Sprachhinweis.
**4. Wasserkocher/ Wasserwarmhaltefunktion**
   Der Wasserbehälter kann durchaus auch als Wasserkocher benutzt werden.
**5. Wasseraufsteigrohr**

## Patentansprüche

1. **Patentanspruch auf die elektrisch betreibbare Teemaschine, zusammengesetzt aus:**
• ein Anzeigefeld welches per Finger bedienbar ist (1) (Touchscreen), oder bedienbar durch andere Tastfelder / Tastknöpfe.
• einem Wasserbehälter (2), welche das Wasser über ein verstecktes Heizelement (2.4) kocht und auf Temperatur hält.
• ein Wasser Aufsteigrohr (2.2) welches die Verbindung der beiden Kannen genau in der Mitte (360°) herstellt und dafür sorgt, das man die Teekanne in jeder Position 360° auf dem Wasserbehälter aufsetzen kann.
• einer Teezubereitungskanne (3), welche einen automatischen Wasser Sprühvorgang über die Teeblätter ermöglicht und den Tee zubereitet.
**Eigenschaften der Erfindung, eine automatische Teezubereitung erfolgt durch:**
• Das Einlassventil (2.5.2), welches das Zurücklaufen des Wassers im Heizrohr (2.5) verhindert
• Das zwischen dem Einlaßventil (2.5.2) und Aufsteigrohr (2.2) befindliche Heizrohr (2.5)
• Der Heizelement für Einlaßrohr (2.5.4), welches über dem Heizrohr (2.5) befestigt ist und wodurch das Wasser den Siedepunkt erreicht und ein Druck erzeugt.
• Aufsteigrohr (2.2), sorgt für den Verbindungsweg zwischen den beiden Kannen. Wasser Aufsteigrohr (2.2) welches die Wasserzufuhr der beiden Kannen genau in der Mitte herstellt und dafür sorgt, das man die Teekanne in jeder Position 360° auf dem Wasserbehälter aufsetzen kann.
• Zweiwegeventil (2.1), welches für die Abdichtung zwischen den bei Kannen ermöglicht und als Sicherheitsventil dient, sorgt gegen Verbrühung bei Abnahme der Teekanne, während des Brühvorgangs.
• Einwegventil (3.1), welches das Zurücklaufen des Wasser in die Teezubereitugskanne verhindert.
• Wasserausflußrohr im Teesieb (4.1), dient zur sampften und gleichmäßigen Übersprühung der Teeblätter mit Wasser.

2. **Y-Dichtung (2.1.1)**
Wird Gewicht auf das Zweiwegeventil (2.1) ausgeübt, so drückt das Außenteil des Ventils komplett nach unten. Bei Druck auf das Ventil (2.1) entsteht durch entweichen von Luft ein Vakuum. Durch das Vakuum haftet der Dichtungsring (2.1.1) am Teekannenboden und es wird die Wasserzufuhr vom Zweiwegeventil (2.1) zum Wasserausflußrohr im Teesieb gewährleistet.

3. **Sprachfunktion**
Nachdem die automatische Teezubereitung abgeschlossen ist, ertönt ein Signalton oder ein Sprachhinweis "Die Teezubereitung ist abgeschlossen". Wenn der Wasserspiegel auf minimum sinkt ertönt ebenfalls automatisch ein Signalton oder ein Sprachhinweis: "Bitte kontrollieren sie den Wasserstand", in verschiedenen Sprachen.

4. **Wasserkocher/ Wasserwarmhaltefunktion**
Der Wasserbehälter kann durchaus auch als Wasserkocher benutzt werden.

5. **Wasseraufsteigrohr**
Dient als Verbinder zwischen Wasserkanne und Teekanne und enthält die Anzeige für die Befüllhöhe (Max. Anzeige).
